# EUROPEAN PATENT APPLICATION

(11) **EP 4 186 356 A1**
(43) Date of publication of application: **31.05.2023**
(21) Application number: 22209290.0
(22) Date of filing: 24.11.2022
(51) Int. Cl.: A01G 31/00, A01G 31/06

(54) **SYSTEM AND METHOD FOR CUTTING AND COLLECTING VEGETABLE PRODUCTS BEING CULTIVATED SOILLESS**

(30) Priority: 29.11.2021 IT 202100030137
(71) Applicant: ZERO SRL, 33170 Pordenone (IT)
(72) Inventor: ZANELLA, Carlo Desiderio, 33170 PORDENONE (IT); ALESSIO, Andrea, 33170 PORDENONE (IT); MODESTO, Daniele, 33170 PORDENONE (IT)
(74) Representative: Studio Torta S.p.A.

(57) **Abstract**

System (1) for cutting and collecting vegetable products (PV) arranged on at least one cultivation shelf (2). The cultivation shelf (2) has a base (2b) to which root portions (PR) of the vegetable products (PV) cling, and a cultivation face (2a) which is opposite the base (2b) and from which epigeal portions (PE) of the vegetable products (PV) extend. The system has: a loading station (10) to support the cultivation shelf (2) in an upside down position, wherein the base (2b) is arranged above the cultivation face (2a) so that the epigeal portions (PE) of the vegetable products (PV) extend from the cultivation face (2a) below the relative root portions (PR) and remain suspended and extended by gravity below the cultivation face (2a); a cutting unit (11) to cut the epigeal portions (PE) suspended below the cultivation face (2a), so as to separate them by gravity from the root portions (PR) clinging to the base (2b) of the cultivation shelf (2); and a collection station (12) to collect the epigeal portions (PE) cut and separated by gravity from the cultivation shelf (2) .

## Description

### CROSS-REFERENCE TO RELATED APPLICATIONS

This patent application claims priority from Italian patent application no. 102021000030137 filed on November 29, 2021, the entire disclosure of which is incorporated herein by reference.

### TECHNICAL FIELD

The present invention relates to a system and to a method for cutting and collecting vegetable products being cultivated soilless.

More in detail, the present invention concerns cutting and collecting vegetable products cultivated on cultivation shelves structured to be used in a soilless aeroponic cultivation system preferably with a vertical architecture (Vertical Farm System); use to which the description below shall refer to explicitly without loss of generality.

### BACKGROUND

As is known, vertical aeroponic soilless cultivation systems generally comprise cultivation shelves for the cultivation of vegetable products and aeroponic fertigation systems for the controlled feed of fertilizing substances to the vegetable products cultivated on said cultivation shelves.

Some cultivation shelves are provided with flat trays made of rigid material and comprise growing layers or growing media or substrates, which generally cover the upper face of the trays. The most widely used growing substrates are based on peat, soil, clay, rock wool, fabric, i.e., materials that are structured to allow the seeds to attach to the substrate during the sowing step and promote development of the root system during the subsequent cultivation and growth steps of the vegetable product on the substrate of the shelf itself.

The methods of cultivating vegetable products through the use of shelves provided with growing substrates of the type cited above, include, after the vegetable products have completed their growth, a cutting step and a collection step of the vegetable products present on the shelves.

The cutting step of the vegetable product is generally carried out by arranging the cultivation shelf with its base resting on a horizontal plane below and its upper face, defining the face for cultivation and growth of the products, facing in an opposite direction to the supporting plane, i.e., upwards.

Therefore, the cutting step is carried out above the shelves and involves cutting the epigeal part of the vegetable products that extends projecting from the cultivation face of the shelves to a predetermined height with respect to the growing substrate below.

The cutting step described above is currently limited to a cut being made at a height above a safety threshold with respect to the growing substrate in order to avoid contact between the latter and the cutting devices. This contact in fact causes damage to the growing substrate or to the cutting devices, and contamination of the edible product with cut portions of the growing substrate itself.

Limitation of the cutting height represents a significant critical factor in current cultivation methods as it heavily affects production yield. In fact, due to this limitation, a considerable percentage of vegetable products present on the shelf is not cut and hence remains on the shelf itself even after collection, thus being lost or producing waste. This critical factor is greater in leaf vegetables, such as salads or lettuce that, having a very flexible structure, tend to bend downwards, i.e. towards the growing substrate below, hence remaining below the safety threshold without being intercepted by the cut, or they are cut in an incomplete/incorrect manner.

Absence of the cut or making only a partial cut of the vegetable products on the shelf leads to incomplete collection and thus contributes to increasing losses or waste products, the incidence of which on the overall productivity of the system is not negligible.

Moreover, tests conducted by the Applicant have shown that, during the cutting step, a significant percentage of vegetable products cut along the outer perimeter edge of the shelf is subject to being accidentally drawn by the cutting device outside the shelf itself. Although these products are cut correctly they are not deposited on the shelf and, consequently, being excluded from the subsequent collection step, form waste products.

Moreover, in the methods described above, the cut vegetable products are deposited on the growing substrate below. Contact of the vegetable products with the growing substrate of the shelf causes the technical problem of contamination of the vegetable products with particles present on the substrate itself, such as soil, filaments and/or other elements such as moulds, bacteria, etc.

In order to overcome this problem, in some solutions in use the collected vegetable products are subjected to operations of selection, cleaning or accurate cleansing, and final washing.

The operating steps described above determine an increase in the overall times for the supply of vegetable products suitable for packaging. Moreover, the washing step influences the complexity, the overall dimensions and the costs of the system as it requires the use of a specific washing station. Moreover, the washing operation influences the "shelf life" or expiry date of the product, as it significantly decreases the life of the product itself. Furthermore, the washing operation determines, on the one hand an increase in consumptions both from the viewpoint of power and from the viewpoint of water used, and on the other requires the use of structures for disposal and treatment of the waste water produced during washing.

Cutting systems for hydroponic cultivation systems are also known and described in JP2016021944A and JP2006180834A.

### SUMMARY

Therefore, the object of the present invention is to produce a system and provide a method for cutting and collecting vegetable products, which is capable of overcoming the technical problems described above.

In accordance with these objectives, according to the present invention, a system is produced and a method is provided for cutting and collecting vegetable products as defined in the related independent claims and preferably, but not necessarily, in any one of the claims dependent thereon.

### BRIEF DESCRIPTION OF THE DRAWINGS

The present invention will now be described with reference to the accompanying drawings, which illustrate a non-limiting example of embodiment thereof, wherein:
- Fig. 1 is a perspective view of a system for cutting and collecting vegetable products produced according to an embodiment of the present invention, in which some component parts and the cultivation shelves have been removed for clarity,
- Fig. 2 shows, in enlarged scale, a portion of the system illustrated in Fig. 1 in which some component parts and the cultivation shelves have been removed for clarity,
- Fig. 3 is a side elevation view of the system illustrated in Fig. 1, in which some component parts and the cultivation shelves have been removed for clarity,
- Fig. 4 is a front view of the system illustrated in Fig. 1, in which some component parts and the cultivation shelves have been removed for clarity,
- Fig. 5 is a plan view of the system illustrated in Fig. 1, in which some component parts and the cultivation shelves have been removed for clarity,
- Fig. 6 is an exemplary perspective view with parts in transparency and parts removed for clarity of an aeroponic cultivation shelf that can be used for cutting and collecting vegetable products according to the dictates of the present invention,
- Fig. 7 is a side elevation view with parts shown in section and parts removed for clarity of the aeroponic cultivation shelf shown in Fig. 6, in a first operating position,
- Fig. 8 is a side elevation view with parts shown in section and parts removed for clarity of the aeroponic cultivation shelf shown in Fig. 6 in a second operating position overturned/tilted with respect to the first operating position,
- Fig. 9 is a side elevation view with parts shown in section and parts removed for clarity, of a part of the system for cutting and collecting vegetable products cultivated on aeroponic cultivation shelves, produced according to an embodiment of the present invention,
- Figs. 10, 11 and 12 illustrate, with parts shown in section and parts removed for clarity, three operating steps of the system for cutting and collecting vegetable products cultivated on aeroponic cultivation shelves, forming the subject matter of the present invention.

### DESCRIPTION OF EMBODIMENTS

The present invention concerns the automated cutting and collection of vegetable products cultivated by means of aeroponic cultivation shelves in a soilless (or soil-less) aeroponic cultivation (or culture) system (not illustrated).

In the description below, the term vegetable product shall preferably mean an agricultural product preferably for use as food (edible). Purely by way of non-limiting example, vegetable products can comprise, among others: salads, vegetables, aromatic herbs (such as rocket, basil, mint) and/or similar. However, it is understood that the present invention is not limited to the cutting and collection of the vegetable products for food use listed above, but can relate, additionally or alternatively, to the cutting and collection of other vegetable products not listed, for example non edible vegetable products such as: flowers, ornamental plants and/or similar.

Moreover, the present invention can be applied to the cutting and collection of vegetable products for herbal, officinal and/or pharmaceutical uses, or as adjuvants thereto.

In the description below, the term (artificial) cultivation system will be meant as an aeroponic cultivation system preferably with a soilless vertical and/or "indoor" architecture (soilless cultivation system or vertical farm system), provided with: supporting frames/racks with a vertical architecture arranged inside a room or a closed containment module structured to vertically support the aeroponic cultivation shelves (suitable to be used in the aeroponic system) separated on several levels one above the other to form horizontal rows; electric lighting systems to illuminate the cultivation shelves by means of light sources (e.g. LEDs); air conditioning systems to supply conditioned air at a controlled temperature to the room or closed module; fertigation systems of aeroponic type to selectively feed mixtures of fertilizers to the shelves; and an electronic system that controls the aforesaid systems based on a soilless (artificial) cultivation method.

The cultivation system can be produced, for example, as described in the Italian patent no. 102019000003167 and/or in the Italian patent no. 102019000003689 and/or in the Italian patent no. 102019000022191, by the same Applicant, the content of which (description and drawings) is entirely incorporated herein by reference.

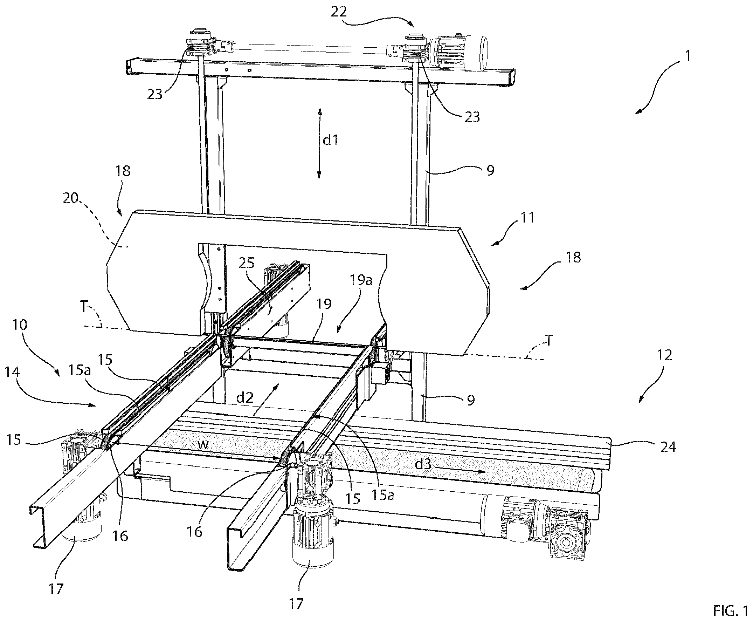

With reference to Figs. 1, 3, 4 and 5, the number 1 indicates as a whole a system 1 for cutting and collecting vegetable products PV being cultivated soilless on aeroponic cultivation shelves 2.

According to a preferred advantageous embodiment, the aeroponic cultivation shelves 2 comprise cultivation shelves 2 without growing media or without substrates.

Each aeroponic cultivation shelf 2 is structured to cultivate and support a plurality of vegetable products.

It should be specified that the term "aeroponic cultivation shelf without growing media or growing substrates" is meant as a ledge, tray or shelf that has no growing layer or substrate (and/or medium) based on: soil, clay, rock wool, fabric, meshes, porous surfaces or bases or similar. In detail, the aeroponic cultivation shelf 2 is preferably without growing substrates (or layers) (and/or medium) designed to cover at least one face of the shelf, such as its cultivation face described in detail below. In other words, each aeroponic cultivation shelf 2 supports a plurality of vegetable products PV designed to be cut and collected by the system 1 and is produced according to the present invention, hence so that the relative cultivation face is free from any growing substrate structured to be able to be passed through or at least partially perforated by the vegetable products during their growth/cultivation. For example, the cultivation shelves 2 can advantageously be produced as described in the Italian patent application no. 102019000003689 and/or in the Italian patent application no. 102019000022191, by the same Applicant, the content of which (description and drawings) is entirely incorporated herein by reference.

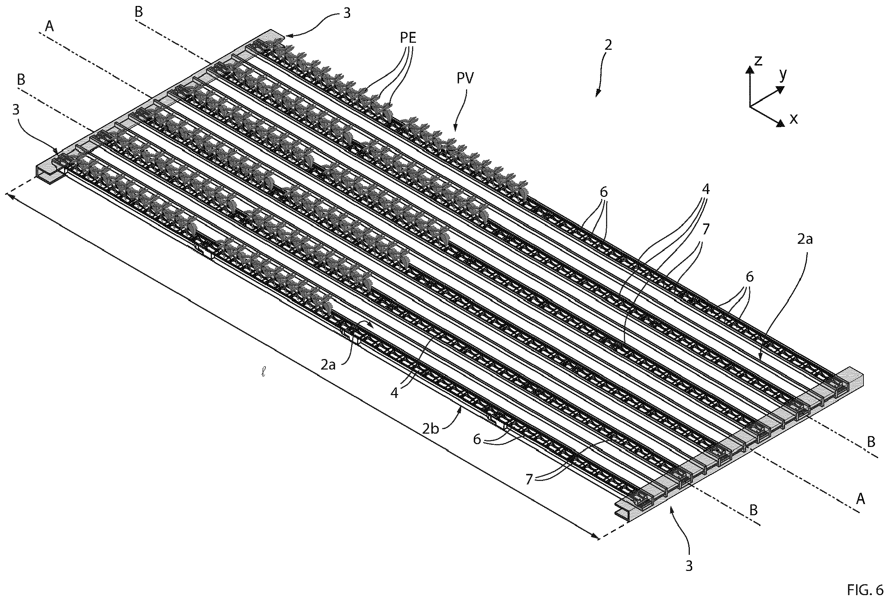

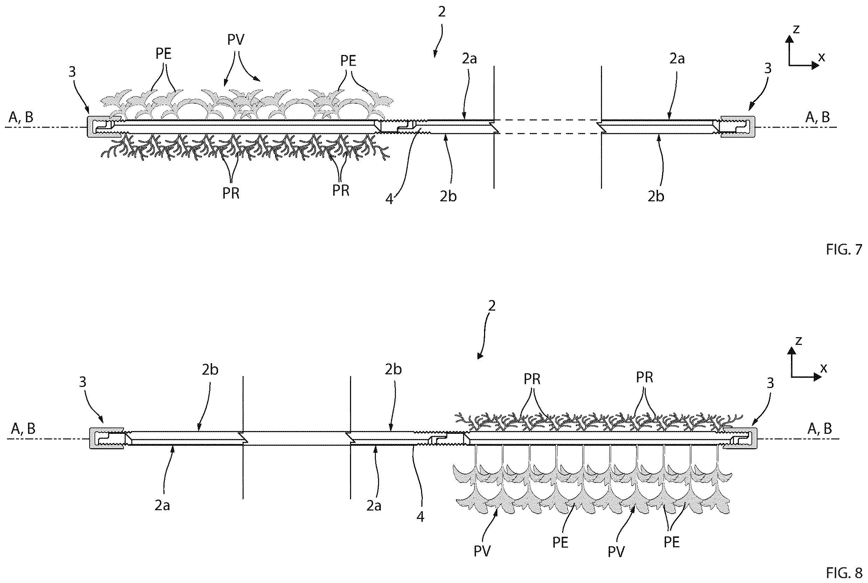

With reference to the accompanying figures, the aeroponic cultivation shelves 2 are substantially plate-like, preferably approximately quadrangular, and each has two opposite major faces. A major face indicated hereinafter as cultivation face 2a is facing upwards in Figs. 6 and 7. The major face opposite the cultivation face 2a is indicated with base 2b and is facing downwards in Figs. 6 and 7.

The vegetable products PV have a root portion PR clinging to the cultivation shelf 2 and an epigeal portion PE that extends projecting from the cultivation face 2a of the shelf 2 itself.

Figs. 6, 7 and 8 show a cultivation shelf 2 advantageously used for cultivation of the vegetable products PV treated (processed) by the system 1 of the present invention. In the example illustrated in Figs. 6-8, the aeroponic cultivation shelves 2 have a reference axis A, have a preferably plate-like (flat) surface having a quadrangular shape, for example rectangular. In the example illustrated, the aeroponic cultivation shelves 2 are made of polymer based (plastic) materials. The cultivation face 2a is provided with a plurality of seats 6 that house respective root portions PR of the vegetable products PV. Preferably, the walls of the seats 6 are arranged in direct contact with the root portions PR of the vegetable product PV without the interposition of any growing medium or substrate. According to a possible embodiment shown in Fig. 6, the seats 6 are preferably each provided on the relative bottom of a through opening or through slot 7 structured to be passed through by, and to remain in direct contact with, the root portion PR of the vegetable product PV.

The through opening or through slot 7 is structured to mechanically retain the root portion PR of the vegetable product PV hanging from the cultivation shelf 4, when the cultivation shelf 4 is arranged in an upside down position (described in detail below).

According to a possible embodiment, the aeroponic cultivation shelves 2 can have a modular structure that is easy to assemble/disassemble. In the example illustrated, the aeroponic cultivation shelves 2 comprise a supporting frame 3 and a plurality of cultivation bars 4. The cultivation bars 4 have a substantially rigid structure and are preferably made of polymer (plastic) materials. The bars 4 can be designed to be coupled to the supporting frame 3, preferably in a stable but easily removable (manually separable) way. The cultivation bars 4 are substantially rectilinear and extend along respective longitudinal axes B substantially parallel to the axis of reference A. According to the preferred embodiment illustrated in Fig. 6, the seats 6 are produced on the cultivation bars 4. In the example illustrated in Fig. 6, the aeroponic cultivation shelves 2 have a width f of around 75 cm, measured parallel to the axis A. The width ℓ can advantageously be comprised between around 0.2 metres and around 2 metres.

Preferably, the seats 6 are approximately cup-shaped. Preferably, the seats 6 are arranged more or less equidistant from one another. Preferably, the through slot 7 can be approximately cross-shaped or similar, and is produced on the bottom wall of the cup-shaped seat 6. The internal surface of the seats 6 is without, i.e., is not covered by, supporting/clinging layers. The use of seats 6 provided with through openings on the bottom wall has the technical effect of causing the roots to mechanically cling, by means of the openings themselves, to the cultivation bar 4 itself when the cultivation shelf 2 is in the upside down position, without the need to use any intermediate supporting/clinging layer between the vegetable products PV and the bar 9.

This makes it possible to solve the technical problem present in known systems, which must necessarily use nets or porous retaining surfaces, leading to additional costs.

Moreover, the Applicant has found that the cross shape of the opening 7 further improves retention of the vegetable product PV by the cultivation bar 4 when the aeroponic cultivation shelf 2 is completely overturned to make the cut.

It is understood that the aeroponic cultivation shelves 2 can be produced in one piece. In other words, the aeroponic cultivation shelves 2 can comprise a monolithic (flat) plate of congruous thickness that is preferably made of polymer (plastic) material, and has seats 6 that are produced on the cultivation face 2a, each having a through opening or slot 7. Moreover, it is understood that the cultivation shelves 2 can comprise a rigid structure formed by the cultivation bars 4 fixed stably to the supporting frame 3.

With reference to Figs. 1 to 5, the system 1 comprises a loading station 10 designed to support the aeroponic cultivation shelf 2 in a first position, indicated hereinafter with upside down position, to arrange the epigeal portions PE of the vegetable products PV below the relative root portions PR so that the epigeal portions PE are freely suspended and extended by gravity below the cultivation face 2a, downwards (Fig. 8).

The system 1 further comprises a cutting unit 11 that is designed to cut the epigeal portions PE freely suspended below the cultivation face 2a of the aeroponic cultivation shelf 2, in order to separate them by gravity from the root portions PR retained by the aeroponic cultivation shelf 2 in the upside down position.

The system 1 further comprises a collection station 12 designed to collect the epigeal portions PE cut and which have been separated (fallen) by gravity from the root portions PR still clinging to the cultivation shelf 2.

The Applicant has found that by arranging the aeroponic cultivation shelf 2 in the upside down position with respect to the common cultivation position in which the base 2b of the cultivation shelf 2 is below the cultivation face 2a, this obtains the technical effect of extending the epigeal portions PE downwards by gravity causing homogeneous and uniform vertical straightening of the epigeal portions PE of the vegetable products PE on the whole area of the cultivation face 2a. In this way, due to the force of gravity, a vertical extension of the epigeal portions PE is also obtained, which in the cultivation position droop or bend towards the cultivation face 2a.

The Applicant has also found that by cutting the epigeal portions PE of the aeroponic cultivation shelf 2 arranged in the upside down position, a considerable increase is obtained in the percentage of epigeal portions PE cut and collected and, accordingly, an increase in the yield (reduction in waste).

According to a possible embodiment, the cutting unit 11 is structured so as to move upon command along a vertical direction so as to adjust the cutting height of the vegetable products (PV).

With reference to an advantageous embodiment shown in Figs. 1 to 5, the system 1 can comprise a rigid frame 9 arranged resting on the surface or ground S below and is designed to support the loading station 10.

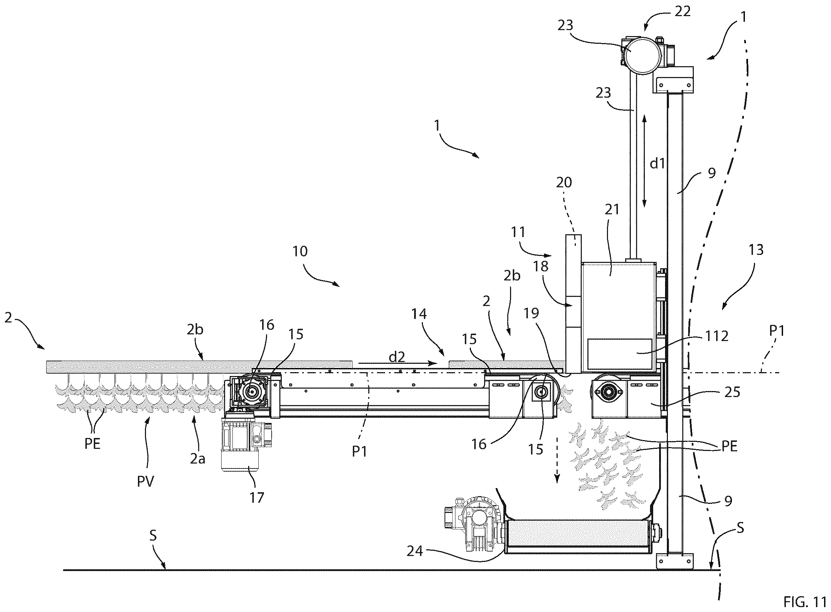

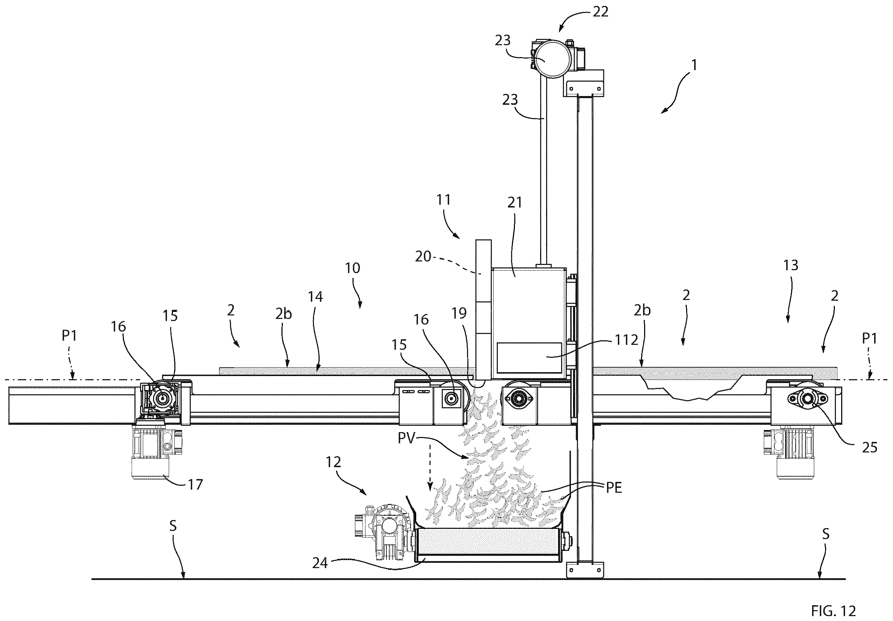

In the example illustrated in Figs. 11 and 12, the loading station 10 has a plane P1 on which the aeroponic cultivation shelves 2 lie. The loading station 10 can advantageously be structured to move the aeroponic cultivation shelves 2, maintaining them on the plane P1, along a direction d2 between an inlet in which it receives the aeroponic cultivation shelves 2 in the upside down position, towards the cutting station 11. In the example illustrated, the plane P1 is advantageously horizontal. In the example illustrated, the direction d2 is advantageously horizontal.

The loading station 10 can preferably comprise a conveyor 14. The conveyor 14 extends along the direction d2 on a plane parallel to the plane P1, preferably horizontal. In the example illustrated, the conveyor 14 can advantageously be arranged so that the cultivation face 2a of the aeroponic cultivation shelves 2 lies approximately on the plane P1. The conveyor 14 is further structured so as to support the aeroponic cultivation shelves 2 on the two external lateral edges orthogonal to the axis A and parallel to the direction d2, so that the central area of the cultivation face 2a comprised between the two lateral edges of the cultivation shelves 2 remains free and uncovered, to ensure that the epigeal parts PE are freely suspended by gravity towards the ground S (downwards).

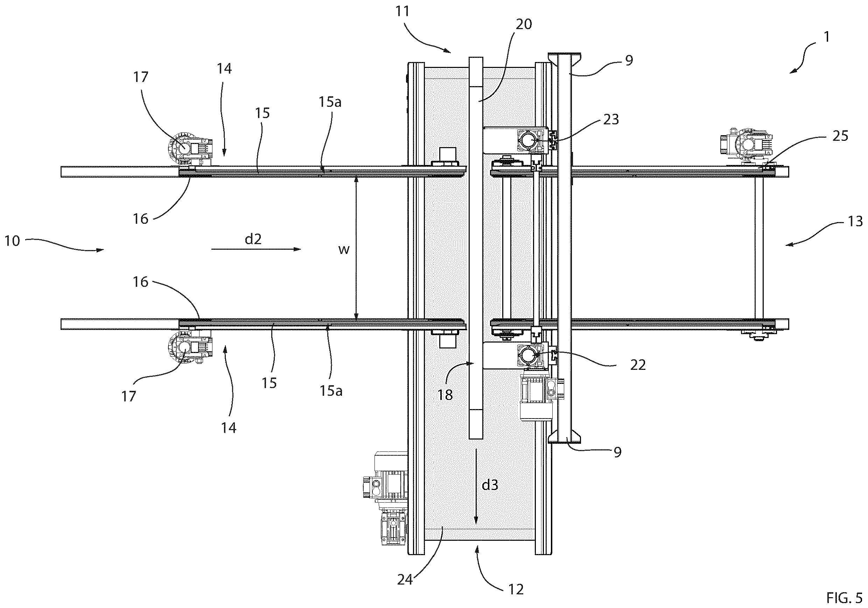

According to a possible and advantageous embodiment shown in Figs. 1 to 5, the conveyor 14 can comprise a pair of substantially web-like conveyor belts 15. In the example illustrated the conveyor belts 15 are looped around two respective pairs of pulleys 16. The two pairs of pulleys 16 can be coupled in a freely rotatable manner on two respective sides of the rigid frame 9 opposite each other with respect to a vertical center plane of the conveyor 14. The driving belt 15 comprises a lower horizontal branch and an upper horizontal branch 15a, against which a lateral edge of the aeroponic cultivation shelf 2 rests. Preferably, the two conveyor belts 15 are arranged at a distance w from one another (Fig. 5) which is advantageously slightly smaller than the width ℓ□ of the aeroponic cultivation shelves 2 (transversal to the direction d2). In use, the opposite (lower) lateral edges of the aeroponic cultivation shelves 2 rest on the upper branches 15a of the conveyor belts 15 and the epigeal part PE of the vegetable products PV project by gravity from the cultivation face 2a towards the ground S in the free space comprised between the two conveyor belts 15. The conveyor 14 can preferably comprise one or more drive units 17, such as motors/electric actuators or similar, which are mechanically connected to the pulleys 16 and are designed to rotate the conveyor belts 15 to move the aeroponic cultivation shelves 2 along the direction d2 towards the cutting unit 11.

With reference to Figs. 1 to 5, the cutting unit 11 is designed to cut, in an automated manner, the epigeal part PE of the vegetable products PV present on the aeroponic cultivation shelves 2 in the upside down position along a cutting line T parallel or coplanar to the plane P1. In the example illustrated, the cutting unit 11 is arranged so that the cutting line T lies on a plane immediately below the plane P1.

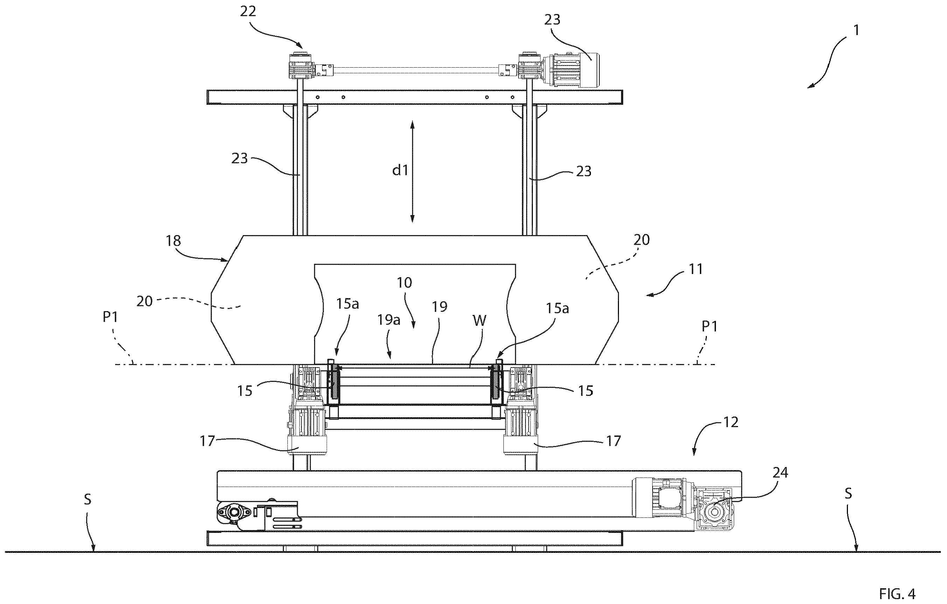

According to the preferred example of embodiment shown in Figs. 1-5, the cutting unit 11 is mechanically coupled to the rigid frame 9 downstream of the loading station 10 along the direction d2. Preferably, the cutting unit 11 is structured so as to move, upon command, along a direction d1 orthogonal to the plane P1, preferably vertical (Fig. 4), away from and towards the plane P1, so as to adjust the height of the cutting line T with respect to the plane P1 itself.

As shown in Figs. 1-5, the cutting unit 11 can comprise, for example, at least one cutting device 18 provided with at least one blade 19. The blade 19 can have a preferably metal band-shaped structure and an advantageously serrated cutting edge. It is understood that according to an embodiment (not illustrated), the cutting device 18 can be provided with a series of blades 19.

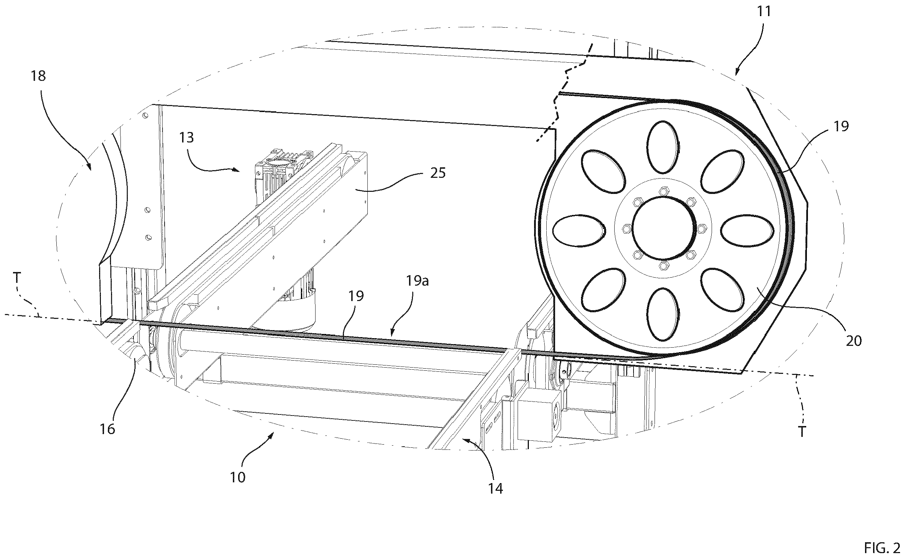

In the example illustrated, the blade 19 is looped around a pair of pulleys 20 supported by the rigid frame 9 (only one of which is shown in Fig. 2) so as to lie on a plane orthogonal to the direction d2. In the example illustrated, the cutting device 18 comprises at least one driving unit 21, such as a motor/electric actuator or similar, which is mechanically connected to at least one pulley 20 in order to rotate it so as to rotate the blade 19.

According to the preferred embodiment illustrated in Figs. 2 and 4, the blade 19 has a horizontal branch 19a that lies on a plane coplanar to the cutting line T and in use cuts the epigeal part PE of the vegetable products PV present on the cultivation face 2a.

With reference to the example illustrated in Figs. 1 to 5, the cutting unit 11 can preferably comprise a moving device 22 designed to move the cutting device 18 along the direction d1 away from and towards the plane P1, so as to vary the height of the horizontal branch 19a of the blade 19 with respect to the plane P1. The moving device 22 can, for example, comprise a moving mechanism with recirculating ball screws 23 or the like, preferably operated by a motor/electric actuator.

It is understood that the present invention is not limited to a cutting unit 11 provided with a cutting device provided with a blade 19 of the type described above, i.e., band-shaped, but can, alternatively or additionally, have other cutting devices, provided, for example, with rectilinear (not band-shaped) blades with alternated movement, or disc blades or laser cutting devices, or the like.

According to the preferred example of embodiment shown in Figs. 1 to 5, the collection station 12 is advantageously positioned immediately below the cutting unit 11, so as to collect the epigeal part PE of the vegetable products PV that fall by gravity from the aeroponic cultivation shelf 2 during cutting by the cutting unit 11. In the example illustrated, the collection station 12 can be structured to automatically move the cut and collected epigeal part PE towards a predetermined outlet of the system 1.

In the example illustrated in Figs. 1 to 5, the collection station 12 comprises a belt conveyor 24 preferably coupled to the rigid frame 9 below the cutting device 18. In the example illustrated, the belt conveyor 24 extends along a direction d3 preferably substantially orthogonal to the direction d2. The belt conveyor 24 is designed to receive the epigeal parts PE of the vegetable products PV immediately after cutting and to transfer them towards the predetermined outlet of the system 1.

As shown in Figs. 1-5, the system 1 can further preferably comprise an unloading station 13 designed to receive the aeroponic cultivation shelves 2 after cutting of the epigeal part PE of the vegetable products PV and to deposit the epigeal part PE in the collection station 12 and to convey the aeroponic cultivation shelves 2 towards a shelf unloading outlet.

The unloading station 13 can preferably comprise a conveyor 25, preferably horizontal, coupled to the frame 9 and positioned immediately downstream of the cutting unit 11. Preferably, the conveyor 25 is arranged aligned with and adjacent to the conveyor 14 so as to be more or less coplanar therewith to be able to receive the aeroponic cultivation shelves 2 arranged in the upside down position from the conveyor 14 following cutting of the epigeal part PE of the vegetable products PV.

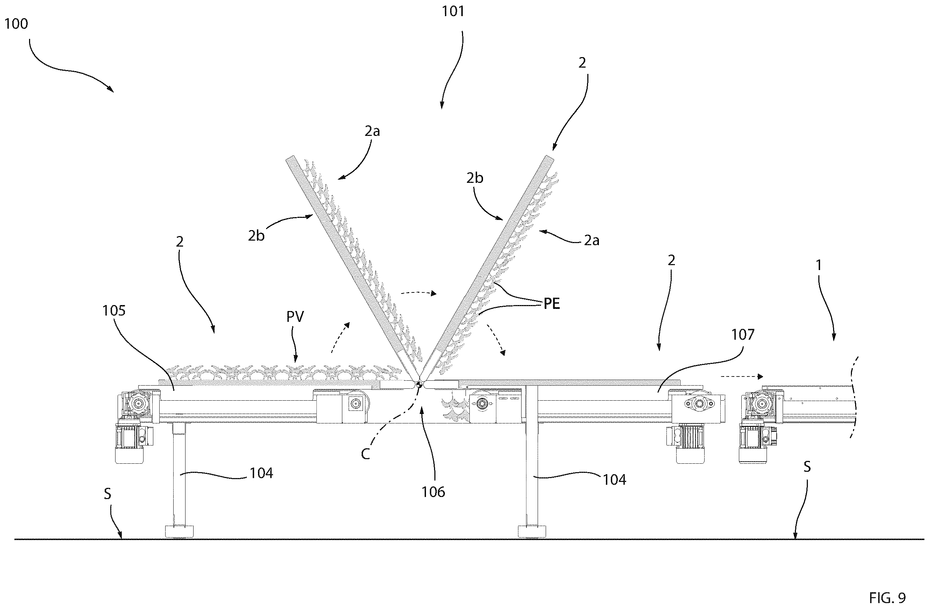

With reference to Fig. 9, the system 1 can further preferably comprise a tilting station 101, which can be arranged upstream of the loading station 10. The tilting station 101 is designed to: receive the aeroponic cultivation shelves 2 in a second position corresponding to the cultivation position described above, and automatically tilt, i.e., overturn the aeroponic cultivation shelves 2 from the cultivation position to the upside down position.

The tilting station 101 can, for example, comprise: a frame 104 for resting on the ground S, a belt conveyor 105 to receive at the inlet the aeroponic cultivation shelves 2 in the cultivation position in which the base 2b is arranged resting on the conveyor belt of the belt conveyor 105; an overturning device 106 which is designed to overturn the aeroponic cultivation shelves 2, and a conveyor 107 to supply the cultivation shelves 2 in the upside down position at the inlet of the loading station 10. The overturning device 106 can be structured so as to: selectively grip the aeroponic cultivation shelf 2 present on the belt conveyor 105, rotate the aeroponic cultivation shelf 2 through around 180° with respect to a horizontal axis C so as to reach the upside down position, and arrange the aeroponic cultivation shelf 2 resting on the conveyor 107 in the upside down position.

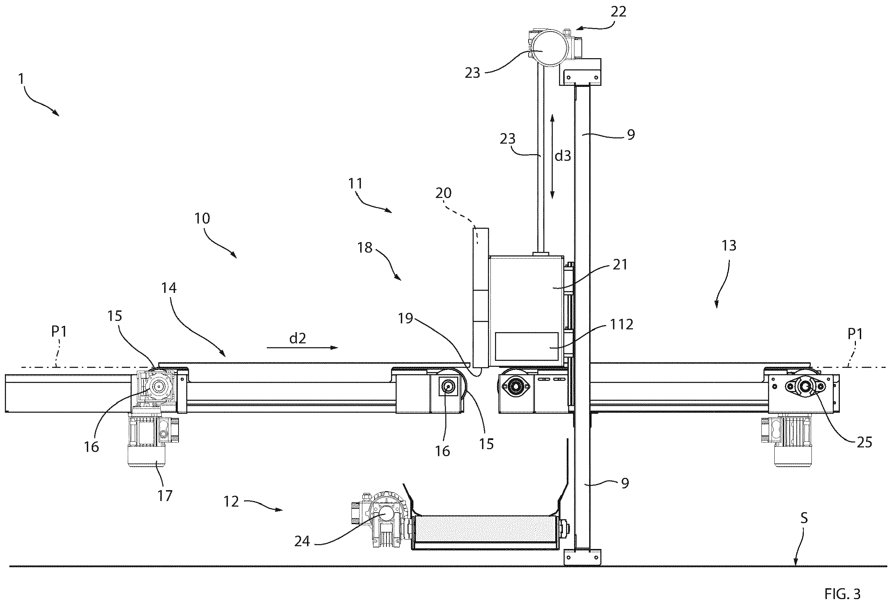

The system 1 is preferably provided with an electronic control unit 112 (Figs. 3, 11 and 12) that monitors the operations carried out by the loading station 10, by the cutting unit 11, by the collection station 12 and/or by the unloading station 13, and if present by the tilting station 101 based on the operating steps implemented by the method for cutting and collection described below.

The method for cutting and collecting vegetable products PV comprises the steps of: arranging the aeroponic cultivation shelves 2 preferably in sequence, one after another, in the loading station 10 so that the epigeal portions PE of the vegetable products PV of each aeroponic cultivation shelf 2 is below the relative root portions PR so as to extend projecting by gravity in a freely suspended manner below the cultivation face 2a, cutting the epigeal portions PE freely suspended from the cultivation face 2a of the cultivation shelf 2 by means of the cutting unit 11 in order to separate them by gravity from the root portions PR retained by, and clinging to, the aeroponic cultivation shelf 2, and collecting the epigeal portions PE cut, separated by gravity from the cultivation shelf 2 by means of the collection station 12 below.

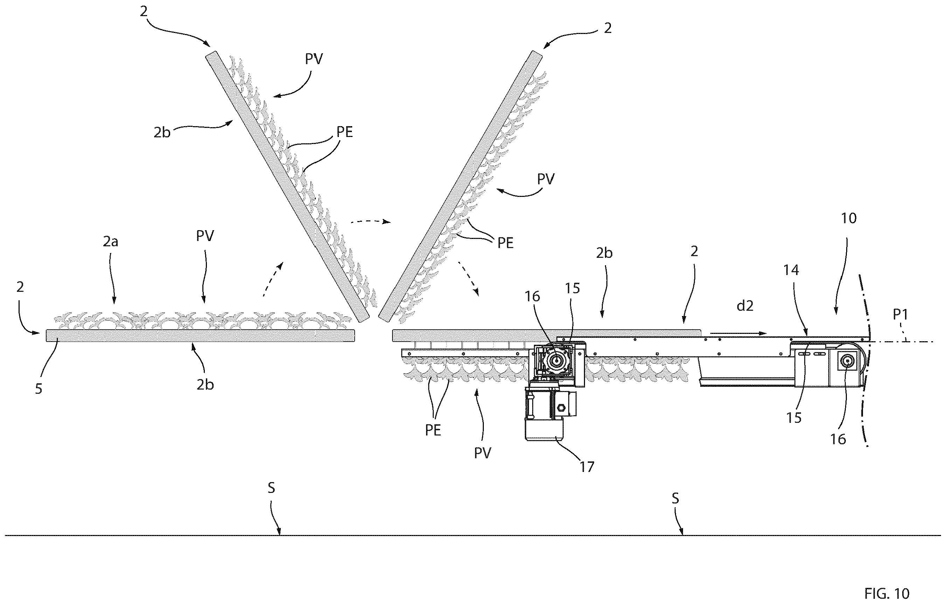

With reference to Figs. 6-12, the method comprises the step of arranging the aeroponic cultivation shelf 2 on the conveyor 14 in the upside down position with the lateral edges resting on the conveyor belts 15 so that the epigeal portions PE that project below the cultivation face 2a are freely suspended vertically by gravity, moving the aeroponic cultivation shelf 2 in the upside down position along the direction d2 towards the cutting unit 11, cutting the epigeal parts PE of the vegetable products PV suspended vertically downwards by means of the cutting device 18 during the forward movement of the aeroponic cultivation shelf 2 so as to cause them to fall by gravity into the collection station 12, collecting the epigeal parts PE cut and moving them towards the predetermined outlet, and moving the cultivation shelf 2 towards the unloading station 13.

It is understood that the operations described above are carried out repeatedly for each cultivation shelf 2 loaded at the inlet of the loading station 10.

As schematically illustrated in Figs. 11 and 12, during the forward movement in the direction d2, the aeroponic cultivation shelf 2 passes through the cutting unit 11 so that the epigeal part PE is cut by the blade 19 along a cutting line T and is deposited by gravity in the belt conveyor 24. After passing through the cutting unit 11, the aeroponic cultivation shelf 2 is moved forward so as to be automatically arranged on the unloading station 13. While passing through the cutting unit 11, the aeroponic cultivation shelf 2 is moved above the cutting device 18 so as not to be intercepted thereby, with its cultivation face 2a preferably very close to the cutting portion 19a of the blade 19, so that the vegetable products PV are cut more or less at the base of the epigeal part PE.

With reference to Fig. 9, according to a possible embodiment in which the system 1 comprises the tilting station 101, the method comprises the step of overturning the aeroponic cultivation shelves 2 from the cultivation position to the upside down position. This step can comprise the steps of gripping the aeroponic cultivation shelf 2 received at the inlet in the cultivation position, rotating the aeroponic cultivation shelf 2 gripped around a more or less horizontal axis C by means of the overturning device 106 to arrange the aeroponic cultivation shelf 2 in the upside down position so as to supply it at the inlet to the loading station 10.

It is understood that, alternatively or additionally, the overturning/tilting operation of the aeroponic cultivation shelves 2 into the upside down position can be carried out manually by an operator.

With the system and the method for cutting described above it is possible to considerably increase both the uniformity in size of the cut products and the product yield. In fact, by cutting the vegetable products PV on the shelves arranged in the upside down position it is possible to cut all the epigeal parts PE present on the shelf uniformly and at the same height, as they are vertically straightened by gravity.

Moreover, by cutting the vegetable products PV on the aeroponic cultivation shelves 2 in the upside down position it is possible to increase the precision of the cut and to avoid separating the vegetable product in the vicinity of flowers or leaves destined to be collected.

Moreover, by cutting the vegetable products PV on the aeroponic cultivation shelves 2 in the upside down position and separating the epigeal parts PE from the overturned shelf by gravity it is possible to collect all the epigeal parts cut, thereby reducing waste caused by failure to collect products that deposit on the cultivation face of the shelf and/or that are drawn outside the shelf itself.

Moreover, by cutting the vegetable products PV on the aeroponic cultivation shelves 2 without soil or other similar friable growing substrates in the upside down position this eliminates the need to carry out a step of washing the collected product, given that the absence of soil or other similar friable growing substrates on the aeroponic cultivation shelves 2 allows them to be overturned without the risk of contaminating the epigeal parts collected.

Moreover, positioning of the aeroponic cultivation shelves 2 in the upside down position with their lateral edges resting on the conveyor eliminates the technical problem of jamming thereof caused by root portions.

Finally, it is clear that modifications and variants can be made to the system and to the method for cutting and collecting the vegetable products described above without departing from the scope of protection of the present invention.

For example, in a different embodiment, not illustrated, the loading station 11 could be structured to receive the cultivation shelves 2 resting against it in the upside down position and to keep them blocked, while the cutting unit 11 is mounted movable on the frame 9 so as to move horizontally on the plane P1 along a direction parallel to the direction d2 away from and towards the loading station 11, so as to cut, during the movement, the suspended epigeal parts PE of the vegetable products PV present on the shelf.

## Claims

1. System for cutting and collecting vegetable products (PV) which are cultivated soilless on at least one aeroponic cultivation shelf (2), which has no growing media or substrates,
the aeroponic cultivation shelf (2) has a base (2b) to which root portions (PR) of said vegetable products (PV) cling, and a cultivation face (2a) which is opposite the base (2b) and from which epigeal portions (PE) of said vegetable products (PV) extend,
the cultivation face (2a) is provided with seats (6) that house the root portions (PR) of the vegetable products (PV) without the interposition of any growing medium or substrate, said system (1) is **characterized in that** it comprises:
a loading station (10) designed to support said aeroponic cultivation shelf (2) in an upside down position, wherein said base (2b) is arranged above said cultivation face (2a) so that said epigeal portions (PE) of the vegetable products (PV) extend from the cultivation face (2a) below the relative root portions (PR) so as to remain freely suspended and extended by gravity below said cultivation face (2a) itself,
a cutting unit (11) designed to cut the epigeal portions (PE) freely suspended below said cultivation face (2a) in order to separate them by gravity from the root portions (PR) clinging to said base (2b) of said aeroponic cultivation shelf (2), and
a collection station (12) designed to collect said epigeal portions (PE) cut by said cutting unit (11) and separated by gravity from said aeroponic cultivation shelf (2).

2. System according to claim 1, wherein said seats (6) are provided with respective through openings or through slots (7), which are structured to mechanically retain the root portions (PR) when said aeroponic cultivation shelf (2) is arranged in said upside down position.

3. System according to claims 1 or 2, wherein said cutting unit (11) is structured so as to move upon command, so as to adjust the cutting height of the vegetable products.

4. System according to any of the foregoing claims, wherein said loading station (10) is designed to support said aeroponic cultivation shelf (2) in said upside down position on two mutually opposite external lateral edges, so that the cultivation face (2a) of said cultivation shelf (2) remains free and uncovered, to ensure that the epigeal parts (PE) of said vegetable products (PV) are freely suspended by gravity.

5. System according to any one of the foregoing claims, wherein said loading station (10) comprises a first conveyor (14) which is designed to move said aeroponic cultivation shelf (2) into said upside down position along a predetermined movement direction (d2) towards said cutting unit (11), and said cutting unit (11) is designed to cut, during said movement of said aeroponic cultivation shelf (2), the epigeal portions (PE) of said vegetable products (PV) along a cutting line (T) transversal to said movement direction (d2).

6. System according to claim 5, wherein the first conveyor (14) comprises a pair of conveyor belts (15) which are looped around respective pulleys (16), are arranged on opposite sides with respect to a vertical center plane of said first conveyor (14) and are structured so as to support said two lateral edges of said aeroponic cultivation shelf (2) so that the cultivation face (2a) of said aeroponic cultivation shelf (2) remains free and uncovered.

7. System according to any of the foregoing claims, wherein said cutting unit (11) comprises a cutting device (18) designed to cut the epigeal portions (PE) of the vegetable products (PV) of said aeroponic cultivation shelf (2) arranged on said loading station (10), along a cutting line (T) arranged on a plane lying below said cultivation face (2) of the cultivation shelf (2) itself.

8. System according to claims 3 and 5, wherein said cutting line (T) is transversal to said movement direction (d2) of said cultivation shelf (2).

9. System according to any of the foregoing claims, wherein said cutting unit (11) is designed to move away from and towards the cultivation shelf (2) arranged on the loading station (10) so as to cut, during its movement, the epigeal portions (PE) of said vegetable products (PV) present on the cultivation shelf (2) itself.

10. System according to any of the foregoing claims, comprising an unloading station (13) which is arranged downstream of said cutting unit (11) and is designed to receive said aeroponic cultivation shelf (2) after the cutting and separation of said epigeal portions (PE).

11. System according to any of the foregoing claims, comprising a tilting station (101) to overturn said cultivation shelves (2), which is positioned upstream of said loading station (10) and is configured so as to overturn said aeroponic cultivation shelf (2) from a cultivation position, in which said base (2b) is below said cultivation face (2a), to said upside down position.

12. System according to any of the foregoing claims, wherein said aeroponic cultivation shelf (2) comprises a supporting frame (3) and a plurality of rectilinear and parallel cultivation bars (4) that have a substantially rigid structure based on polymeric materials and are coupled to the supporting frame (3) in a stable but easily removable manner.

13. Method for cutting and collecting a plurality of vegetable products (PV) cultivated on at least one aeroponic cultivation shelf (2), which has no growing media or substrates, wherein said cultivation shelf (2) has a base (2b) to which root portions (PR) of said vegetable products (PV) are clinging, and a cultivation face (2a) which is opposite the base (2b) and from which the epigeal portions (PE) of said vegetable products (PV) extend,
the cultivation face (2a) is provided with seats (6) that house the root portions (PR) of the vegetable products (PV) without the interposition of any growing medium or substrate, said method being **characterized by** comprising the steps of:
supporting said aeroponic cultivation shelf (2) in an upside down position by means of a loading station (10) wherein said base (2b) is arranged above said cultivation face (2a) so that said epigeal portions (PE) of the vegetable products (PV) extend from the cultivation face (2a) below the relative root portions (PR) in order to remain freely suspended and extended by gravity below said cultivation face (2a),
cutting the epigeal portions (PE) freely suspended below said cultivation face (2a) by means of a cutting unit (11), in order to separate them by gravity from the root portions (PR) clinging to said base (2b) of said aeroponic cultivation shelf (2),
collecting the epigeal portions (PE) cut by said cutting unit (11) and separated by gravity from said aeroponic cultivation shelf (2) by means of a collection station (12).

14. Method according to claim 13, wherein said seats (6) are provided with respective through openings or through slots (7), which are structured to mechanically retain the root portions (PR) when said aeroponic cultivation shelf (2) is arranged in said upside down position.

15. Method according to any one of claims 13 to 14, comprising the step of moving said cutting unit (11) in a vertical direction so as to adjust the cutting height of the vegetable products (PV).
